# EUROPEAN PATENT APPLICATION

(11) **EP 3 698 625 A1**
(43) Date of publication of application: **26.08.2020**
(21) Application number: 19209674.1
(22) Date of filing: 18.11.2019
(51) Int. Cl.: A01K 63/00, A01K 63/04

(54) **WATER TANK SET WITH FILTER**

(30) Priority: 19.02.2019 JP 2019027192
(71) Applicant: Suisaku Co., Ltd., Tokyo 110-0016 (JP)
(72) Inventor: OGAWA, Yasuhiro, Tokyo 110-0016 (JP)
(74) Representative: Weickmann & Weickmann PartmbB

(57) **Abstract**

In a water tank set with a filter, which includes the filter (F) within a water tank main body (1), the water tank main body (1) is formed in a vessel-shape having an upper surface thereof opened, storage water being to be stored in the water tank main body (1), the filter (F) being provided in an interior of the water tank main body (1). The water tank main body (1) and a filter case (10) of the filter (F) are formed opaque and in a same color as each other. Accordingly, it is difficult for an appreciator who appreciates aquarium fish to see a filter, which is provided within a water tank, from outside of the water tank, thereby enhancing appreciation effects of the aquarium fish.

## Description

### TECHNICAL FIELD

The present invention relates to a water tank set with a filter for breeding aquarium fish such as goldfish, tropical fish, or marine fish.

### BACKGROUND ART

Conventionally, a water tank set with a filter is known in which, in order to breed and raise aquarium fish within a water tank, the filter is provided at an appropriate position within the water tank and activated so as to circulate and filter storage water within the water tank (see, for example, Patent Document 1 described below).

### RELATED ART DOCUMENT

### PATENT DOCUMENT

Patent Document 1: Japanese Patent Application Laid-open No. 2015-104348

### SUMMARY OF THE INVENTION

### PROBLEMS TO BE SOLVED BY THE INVENTION

In the conventional water tank set with a filter, the filter is provided at an appropriate position on a bottom surface of an interior of the water tank, an air pump is communicated with the filter via an air pipe, and pressurized air from the air pump activates the filter so as to circulate and filter storage water within the water tank and also aerate the storage water by jetting air into the water tank.

In such a conventional water tank set with a filter, a water tank main body of the water tank is formed transparent in order to easily appreciate aquarium fish, and thus, in addition to the aquarium fish, the filter provided within the water tank can be also seen through from an outside of the water tank. Therefore, the filter (which is not especially manufactured for ornamental purpose) is an eyesore to an appreciator who wishes to appreciate the aquarium fish, thereby causing a problem of disturbing appreciation effects.

The present invention has been accomplished in light of the above circumstances, and it is an object thereof to provide a novel water tank set with a filter, in which the filter provided within a water tank main body is difficult to see from an outside of a water tank so as to enhance appreciation effects of aquarium fish.

### MEANS FOR SOLVING THE PROBLEMS

In order to achieve the object, according to a first aspect of the present invention, there is provided a water tank set with a filter, comprising within a water tank main body the filter for circulating and filtering storage water which is to be stored within the water tank main body, wherein the water tank main body is formed in a vessel-shape having an upper surface thereof opened, the storage water being to be stored in the water tank main body so as to breed aquarium fish, the filter being provided in an interior of the water tank main body, and the water tank main body and a filter case of the filter are formed opaque and in a same color as each other.

In order to achieve the object, according to a second aspect of the present invention, in addition to the first aspect, an opened upper surface of the water tank main body is closed openably and closably by a transparent lid plate.

In order to achieve the object, according to a third aspect of the present invention, in addition to the first or second aspect, the water tank main body is formed in a vessel-shape, corner parts of the water tank main body being each formed in an arc-shape protruding outward, an outer end of an air supply passage of the filter being continuous to an air pump and facing a recessed inner portion of the corner part.

### EFFECTS OF THE INVENTION

In accordance with the first aspect of the present invention, since the water tank main body is formed in a vessel-shape having the upper surface thereof opened, the storage water is to be stored in the water tank main body so as to breed the aquarium fish, the filter is provided in the interior of the water tank main body, the water tank main body and the filter case of the filter are formed opaque and in the same color as each other, the filter, which is an eyesore to an appreciator who appreciates the aquarium fish, can be made difficult to see, thereby enhancing appreciation effects of the aquarium fish.

In accordance with the second aspect of the present invention, since the opened upper surface of the water tank main body is closed openably and closably by the transparent lid plate, the appreciator can appreciate the aquarium fish from above the water tank main body while making the filter as the eyesore difficult to see.

In accordance with the third aspect of the present invention, since the outer end of the air supply passage of the filter faces the recessed inner portion of the corner part of the water tank main body, the filter can be disposed close to the recessed inner portion of the corner part within the water tank main body so that the filter can be made more difficult to see from the outside of the water tank main body.

### BRIEF DESCRIPTION OF DRAWINGS

[FIG. 1] FIG. 1 is a perspective view of an entire water tank set with a filter according to the present invention. (first embodiment)
[FIG. 2] FIG. 2 is a plan view of the water tank set with a filter, as viewed from arrow 2 in FIG. 1. (first embodiment)
[FIG. 3] FIG. 3 is an enlarged sectional view along line 3-3 in FIG. 2. (first embodiment)

### EXPLANATION OF REFERENCE NUMERALS AND SYMBOLS

- 1: water tank main body
- 2: opened upper surface
- 3: corner part
- 7: lid plate
- 10: filter case
- 13: air supply passage
- 13₁: outer end (of air supply passage 13)
- F: filter
- P: air pump

### MODE FOR CARRYING OUT THE INVENTION

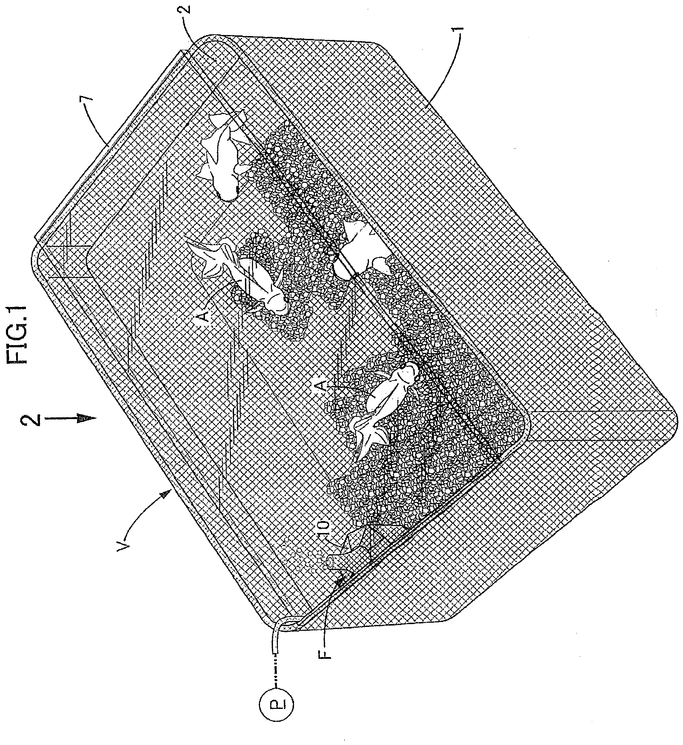

An embodiment of the present invention is explained below based on FIG. 1 to FIG. 3 attached hereto.

### FIRST EMBODIMENT

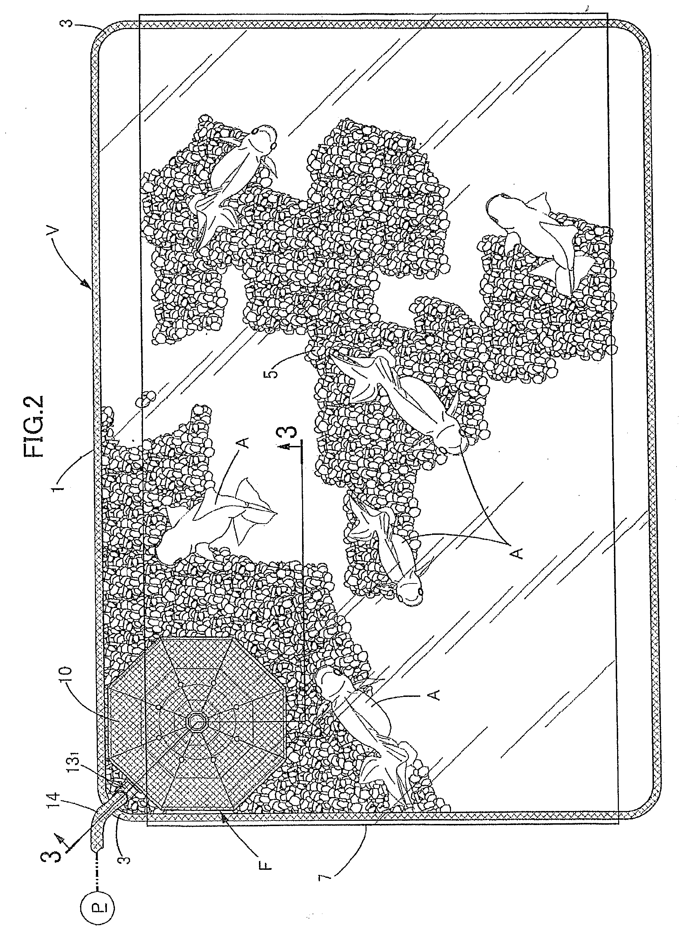

As shown in FIG.1 and FIG. 2, a water tank set with a filter according to the present invention includes a water tank V and a filter F installed on a bottom surface of an interior of the water tank V.

A water tank main body 1 of the water tank V has an upper surface 2 thereof opened and is configured with a rectangular vessel body, the water tank main body 1 being formed integrally from an opaque glass material or a plastic material and colored with an appropriate color (the same color as a filter case of the filter which will be described later). The opened upper surface 2 of the water tank main body 1 is closed openably and closably by a transparent lid plate 7.

Four corner parts 3 of the water tank main body 1 are each formed in an arc-shape protruding outward. Moreover, gravel 5 is appropriately laid on the bottom surface within the water tank main body 1.

The filter F provided on a bottom part within the water tank main body 1 has a feature in that a filter case 10 of the filter F is formed to have the same color, which is opaque, as the water tank main body 1.

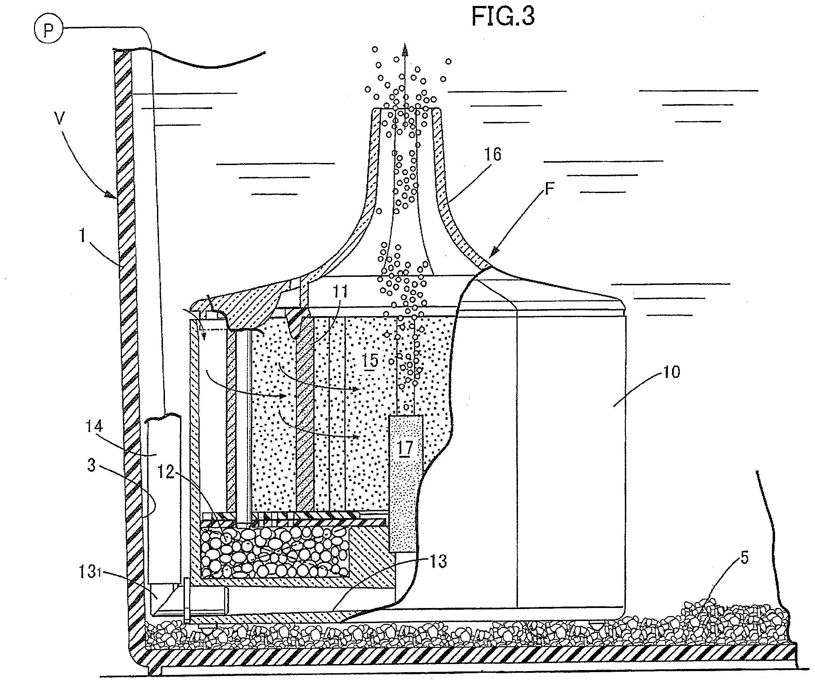

As shown in FIG. 3, in the filter F, a filter material 11 and pebbles 12 functioning as a weight are housed within the filter case 10 formed in an octagonal shape from an opaque plastic material.

An air supply passage 13 is formed on a bottom portion of the filter case 10, an outer end 13₁ of the air supply passage 13 is protruded outward of the filter case 10 and communicated via an air pipe 14 with an air pump P disposed outside of the water tank main body 1. Pressurized air from the air pump P is passed through an air stone 17, which is provided at an outlet of the air supply passage 13, and a filter chamber 15 inside the filter material 11 and then discharged to the outside.

The pressurized air from the air pump P is passed through the air pipe 14 and the air supply passage 13 and then through the air stone 17 so as to be jetted in form of bubbles into the filter chamber 15. The jetted air is moved upward inside the filter chamber 15, and accordingly, storage water inside the filter chamber 15 is sucked up, passed through a discharge pipe 16 together with the air flow, and then returned into the water tank V. Thus, storage water within the water tank V is filtered by the filter material 11.

The filter F is provided within the water tank V. In this case, the filter F is disposed to be deviated to the corner part 3 of the water tank main body 1. That is, the outer end 13₁, protruding outward, of the air supply passage 13 of the filter case 10 is arranged in an arcuate recessed portion on an inner side of the corner part 3, protruding outward, of the water tank main body 1. Thus, the filter F can be disposed as close as possible to the corner part 3 of the water tank main body 1 so that the filter F which is not manufactured for ornamental purpose can be made difficult to see from above the water tank V, and it is possible to appreciate aquarium fish A swimming within the water tank V, from the opened upper surface 2 of the water tank V.

Moreover, since the water tank main body 1 and the filter case 10 of the filter F are formed opaque and in the same color as each other, the filter F which is not manufactured for ornamental purpose can be made difficult to see from outside, thereby further enhancing appreciation effects of the aquarium fish A.

Further, as described above, since the filter F is disposed close to the corner part 3 within the water tank main body 1, the filter F within the water tank main body 1 can be made difficult for an appreciator to see, thereby further enhancing the appreciation effects.

Note that as long as the water tank main body 1 and the filter case 10 of the filter F are opaque and have the same color as each other, any color may be used.

An embodiment of the present invention is explained above, but the present invention is not limited to the embodiment and may be modified in a variety of ways as long as the modifications do not depart from the gist of the present invention. For example, the filtering structure of the filter F is not limited to that of the above-mentioned embodiment.

## Claims

1. A water tank set with a filter, comprising within a water tank main body (1) the filter (F) for circulating and filtering storage water which is to be stored within the water tank main body (1),
wherein the water tank main body (1) is formed in a vessel-shape having an upper surface thereof opened, the storage water being to be stored in the water tank main body (1) so as to breed aquarium fish, the filter (F) being provided in an interior of the water tank main body (1), and the water tank main body (1) and a filter case (10) of the filter (F) are formed opaque and in a same color as each other.

2. The water tank set with a filter according to claim 1, wherein an opened upper surface (2) of the water tank main body (1) is closed openably and closably by a transparent lid plate (7).

3. The water tank set with a filter according to claim 1 or 2, wherein the water tank main body (1) is formed in a vessel-shape, corner parts (3) of the water tank main body (1) being each formed in an arc-shape protruding outward, an outer end (13₁) of an air supply passage (13) of the filter (F) being continuous to an air pump (P) and facing a recessed inner portion of the corner part (3).
